# EUROPÄISCHE PATENTSCHRIFT

(11) **EP 1 028 242 B1**
(45) Veröffentlichungstag und Bekanntmachung des Hinweises auf die Patenterteilung: **12.01.2005**
(21) Anmeldenummer: 00100319.3
(22) Anmeldetag: 07.01.2000
(51) Int. Cl.: F02D 41/14, F02D 35/00, F02D 41/26

(54) **Verfahren und Vorrichtung zur Dämpfung von ruckartigen Fahrzeugbewegungen**
Method and apparatus for damping vibration type vehicle movements
Méthode et dispositif pour réduire les vibrations du type secousses vehicule

(30) Priorität: 11.02.1999 DE 19905604
(43) Veröffentlichungstag der Anmeldung: 16.08.2000
(73) Patentinhaber: ROBERT BOSCH GMBH, 70442 Stuttgart (DE)
(72) Erfinder: Ries-Mueller, Klaus, 74906 Bad Rappenau (DE)

(56) Entgegenhaltungen:
- WO-A-95/11377
- DE-A- 4 108 734
- DE-A- 19 626 536
- US-A- 5 669 354

## Beschreibung

### Stand der Technik

Die vorliegende Erfindung betrifft ein Verfahren zur Dämpfung von ruckartigen Fahrzeugbewegungen, die auf schnelle Änderungen des Motorbetriebszustandes zurückzuführen sind, wobei auf mindestens eine Steuer- oder Regelgröße des Motors derart Einfluß genommen wird, daß die ruckartigen Fahrzeugbewegungen gedämpft werden.

Bei Kraftfahrzeugen mit Otto- oder Dieselmotoren tritt beim Lastwechsel, d.h. beim Übergang vom Schub- in den Zugbetrieb und umgekehrt ein sogenannter Lastwechselschlag auf, der zu Längsschwingungen des Fahrzeugs, insbesondere bei niedrigen Motordrehzahlen führen kann. Diese sich als ruckartige Fahrzeugbewegung bemerkbar machende Erscheinung wird im wesentlichen durch die kinetische Energie von Brennkraftmaschine und Antriebstrang bestimmt, die während eines Lastwechsels infolge von Elastizitäten und Spiel im Antriebstrang freigesetzt und zum Teil an die Fahrzeugkarosserie abgegeben wird. Die unerwünschten Lastwechselschläge können weitgehend verhindert werden, wenn die während des Lastwechsels aufgebaute kinetische Energie auf ein Minimum reduziert wird. Dies geschieht, wie aus der DE 43 21 333 A1 hervorgeht, dadurch, daß der Fahrerwunsch nach einer vom Getriebegang abhängigen Filterung einem Drosselklappensteller zugeführt wird. D.h. der Drosselklappensteller reagiert verzögert, einer bestimmten Funktion folgend, dem Fahrerwunsch. Bei dem bekannten System zur Lastschlagdämpfung sind den einzelnen Getriebegängen zugeordnete Funktionsverläufe mit vorgegebenen Verzögerungszeiten abgespeichert. Mit einigen fest vorgegebenen Filterfunktionen läßt sich keine optimale Lastschlagdämpfung für alle Betriebszustände realisieren. Der Erfindung liegt daher die Aufgabe zugrunde, ein Verfahren der eingangs genannten Art anzugeben, mit dem ruckartige Fahrzeugbewegungen für alle vorkommenden Betriebszustände des Motors gedämpft werden können, um einen optimalen Fahrkomfort zu erreichen.

### Vorteile der Erfindung

Die genannte Aufgabe wird mit den Merkmalen des Anspruchs 1 dadurch gelöst, daß es mehrere nach mindestens einem Betriebsparameter klassifizierte, auf eine Steuer- oder Regelgröße des Motors einwirkende Eingriffsparameter gibt, von denen der dem jeweils aktuellen Wert des Betriebsparameters zugeordnete Eingriffsparameter adaptiv in Abhängigkeit von der Änderung eines oder mehrerer Betriebsparameter eingestellt wird. Es handelt sich gemäß der Erfindung also um ein adaptives Verfahren zur Bedämpfung von Lastschlägen. Dieses Verfahren erfordert einen geringen Applikationsaufwand. Außerdem sorgt das adaptive Verfahren für eine optimale Dämpfung ruckartiger Fahrzeugbewegungen unabhängig von Streuungen der Motor- bzw. Fahrzeugkarosserieeigenschaften und auch von einer Fahrzeugalterung.

Vorteilhafte Weiterbildungen der Erfindung gehen aus den Unteransprüchen hervor.

Die Eingriffsparameter können nach Getriebegängen und/oder nach Drehzahlbereichen und/oder nach Drehmomentbereichen in Klassen eingeteilt sein.

Die Steuer- oder Regelgröße(n), auf welche die Eingriffsparameter Einfluß nehmen, können z.B. die Drosselklappenstellung und/oder der Zündwinkel und/oder der Einspritzbeginn und/oder die Einspritzzeit sein.

Die Eingriffsparameter sind vorzugsweise Filterzeitkonstanten oder Verzögerungszeitkonstanten.

Es ist zweckmäßig, daß die Zeitkonstante eines Filters erhöht wird, wenn die im aktuellen Meßintervall ermittelte Betriebsparameteränderung größer ist als die im vorhergehenden Meßintervall ermittelte Betriebsparameteränderung und daß die Filterzeitkonstante verringert wird, wenn die im aktuellen Meßintervall ermittelte Betriebsparameteränderung kleiner ist als die im vorhergehenden Meßintervall ermittelte Betriebsparameteränderung. In allen übrigen Fällen bleibt die Filterzeitkonstante unverändert. Um eine ausreichende Dynamik des Fahrzeugs zu erhalten, wird die Filterzeitkonstante nur dann erhöht bzw. vermindert, wenn die im aktuellen Meßintervall ermittelte Änderung der Drosselklappenöffnung größer ist als eine vorgebbare Schwelle. Die Filterzeitkonstante bleibt unverändert, wenn die im aktuellen Meßintervall ermittelte Änderung der Drosselklappenöffnung kleiner ist als eine vorgebbare Schwelle.

Vorteilhafterweise wird die Veränderung der Filterzeitkonstante durch eine untere und eine obere Schwelle begrenzt, wobei die Schwellen an die Fahrweise - wirtschaftlich oder sportlich - angepaßt werden können.

Es ist zweckmäßig, daß die adaptive Einstellung des Eingriffsparameters in Abhängigkeit von der Änderung der Motordrehzahl und/oder von einer Drehmomentenänderung oder in Abhängigkeit von der Änderung einer gemessenen Beschleunigung des Fahrzeugs in Fahrtrichtung und/oder einer gemessenen Gierrate erfolgt.

### Zeichnung

Anhand eines in der Zeichnung dargestellten Ausführungsbeispiels wird nachfolgend die Erfindung näher erläutert. Es zeigen:
Figur 1 ein Blockschaltbild einer Vorrichtung zur Lastschlagdämpfung,
Figur 2 Kurvenverläufe, insbesondere der Motordrehzahl, ohne Lastschlagdämpfung,
Figur 3 Kurvenverläufe, insbesondere der Motordrehzahl, mit Lastschlagdämpfung und
Figur 4 ein Ablaufdiagramm des erfindungsgemäßen Verfahrens zur Lastschlagdämpfung.

### Beschreibung eines Ausführungsbeispiels

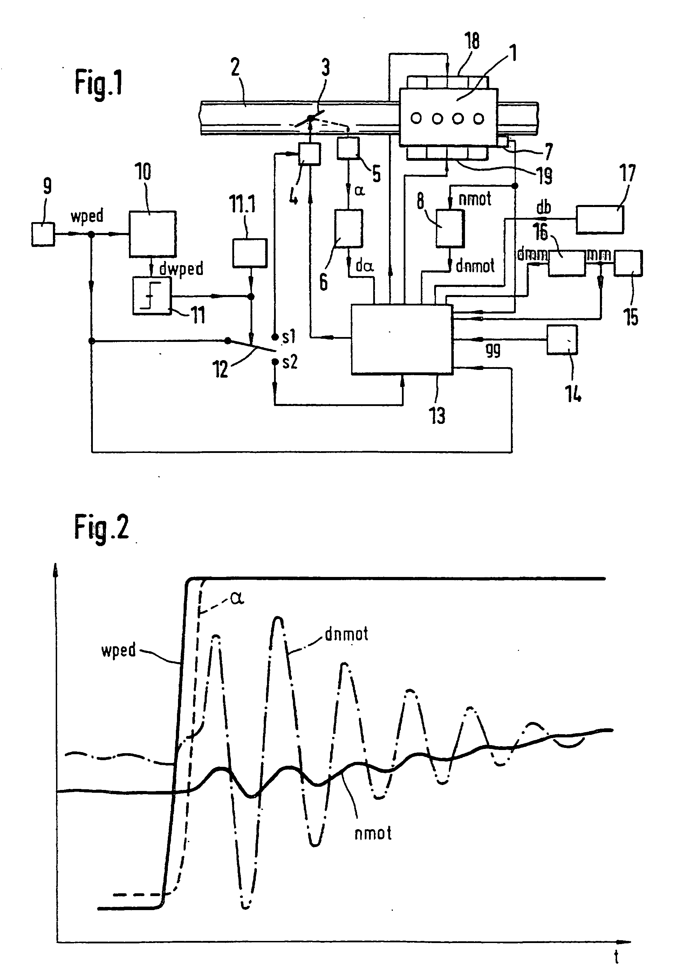

Der Figur 1 ist ein Blockschaltbild zu entnehmen, welches eine Vorrichtung zur Dämpfung von Lastschlägen in einem Kraftfahrzeug darstellt. In diesem Blockschaltbild ist mit 1 eine Brennkraftmaschine bezeichnet, welche ein Ansaugrohr 2 mit einer darin angeordneten Drosselklappe 3 aufweist. Ein Stellglied 4 (Stellmotor) steuert die Öffnung der Drosselklappe 3. Für die Erfassung der Stellung der Drosselklappe 3 ist ein Sensor 5 vorgesehen. Das die Drosselklappenöffnung angebende Ausgangssignal α des Sensors 5 wird einem Schaltblock 6 zugeführt. In diesem Schaltblock 6 wird der Gradient dα, also die zeitabhängige Veränderung der Drosselklappenöffnung α, ermittelt. Die Motordrehzahl mot wird von einem Sensor 7 erfaßt. In einem Schaltblock 8 wird der Gradient dnmot der Motordrehzahl nmot, d.h. die zeitabhängige Veränderung der Motordrehzahl nmot, bestimmt. Ein weiterer Sensor 9 ist vorgesehen, welcher den Fahrerwunsch wped erfaßt. Der Fahrerwunsch drückt sich in der Stellung eines vom Fahrer betätigten Fahrpedals aus. Der Sensor 9 ist beispielsweise ein auf eine Verstellung des Fahrpedals reagierendes Potentiometer. Im Schaltblock 10 wird die zeitliche Änderung des Fahrerwunsches dpwed ermittelt.

Ein Lastwechselschlag, der zu unkomfortablen ruckartigen Fahrzeugbewegungen führt, kommt durch schnelle Übergänge vom Schub- in den Zugbetrieb und umgekehrt zustande. Solche schnellen Übergänge gehen auf plötzliche Änderungen des Fahrerwunsches dpwed zurück. Die im Schaltblock 10 ermittelte zeitliche Änderung des Fahrerwunsches dpwed ist also ein Maß dafür, ob die Geschwindigkeit, mit der ein Lastwechsel abläuft, zu einem Lastwechselschlag führen wird. Im Schaltblock 11 wird daher die zeitliche Änderung des Fahrerwunsches dpwed einer Schwellwertentscheidung unterzogen. Dabei ist diese Schwelle so eingestellt, daß, wenn der Gradient des Fahrerwunsches dpwed die Schwelle übersteigt, ein Lastwechselschlag folgen wird. Andererseits kommt es nicht zu einem Lastwechselschlag, wenn der Gradient des Fahrerwunsches dpwed geringer ist als die Schwelle. Lastwechselschläge können bei einem Motor mit Benzindirekteinspritzung auch dadurch zustande kommen, daß von Homogen- auf Schichtbetrieb und umgekehrt umgeschaltet wird. Bei einem Motor mit Benzindirekteinspritzung kann also eine einen Lastwechselschlag hervorrufende Änderung des Betriebszustandes sowohl aus der Fahrpedalstellung als auch aus der Umschaltung von Homogen- auf Schichtbetrieb und umgekehrt abgeleitet werden.

In der Figur 2 sind die Zusammenhänge zwischen den zeitlichen Verläufen des Fahrerwunsches dpwed, der Drosselklappenstellung α, der Motordrehzahl nmot und des Gradienten der Motordrehzahl dnmot dargestellt. Es zeigt sich, daß bei einer plötzlichen Änderung des Fahrerwunsches dpwed und einer dementsprechenden plötzlichen Änderung der Drosselklappenöffnung α (ohne den nachfolgend noch beschriebenen Eingriff) eine periodisch abklingende Schwingung der Motordrehzahl nmot zur Folge hat, welche die Ursache für einen Lastwechselschlag und eine damit verbundene ruckartige Fahrzeugbewegung ist. Der in der Figur 2 aufgezeichnete Gradient dnmot der Motordrehzahl macht die Drehzahlschwingungen erst recht deutlich.

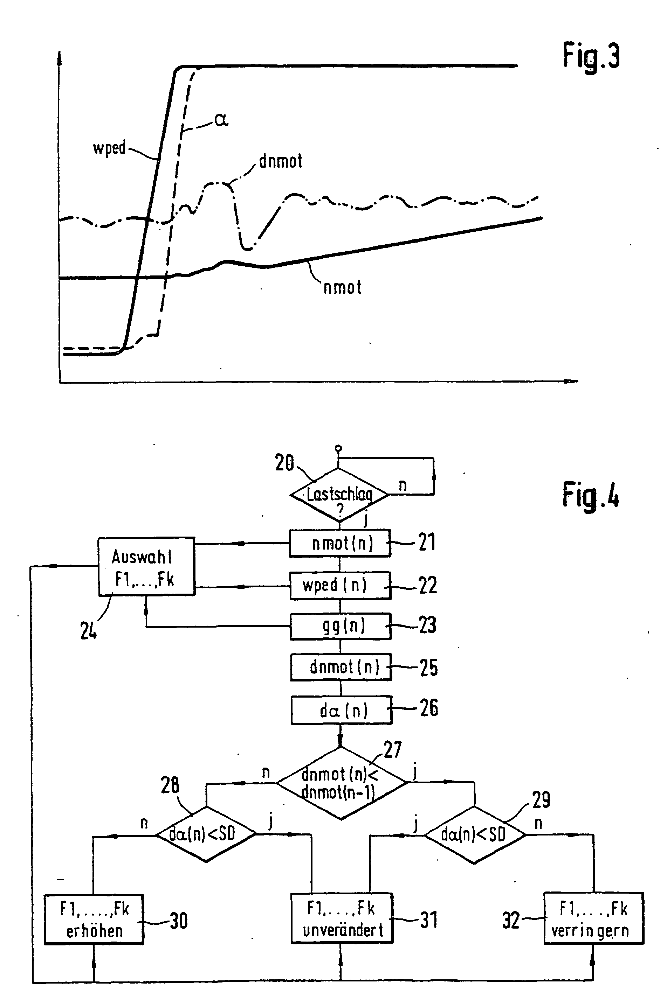

Eine Bedämpfung von Lastwechselschlägen äußert sich, wie man der Figur 3 entnehmen kann, darin, daß die Motordrehzahl nmot nur noch sehr schwache Schwingungen aufweist und dementsprechend die Ausschläge des Gradienten dnmot der Motordrehzahl erheblich geringer sind als bei einem Motor ohne Lastwechselschlagdämpfung.

Wie der Figur 1 zu entnehmen ist, steuert das Ausgangssignal des Schwellwertentscheiders 11 einen Schalter 12. Der Schalter 12 kann aber auch, sofern es sich um eine Brennkraftmaschine mit Benzindirekteinspritzung handelt, von einem Signalgeber 11.1 gesteuert werden, der eine Umschaltung von Homogen- auf Schichtbetrieb oder umgekehrt anzeigt. In der weiteren Beschreibung wird beispielhaft als einziges Steuersignal für den Schalter 12 die Änderung des Fahrerwunsches dpwed betrachtet. Falls kein Lastwechselschlag vom Schwellwertentscheider 11 erkannt wird, liegt der Schalter 12 in der Stellung s1, so daß der Fahrerwunsch dpwed direkt dem Stellglied 4 für die Drosselklappe 2 zugeführt wird. Für den Fall, daß vom Schwellwertentscheider 11 auf Lastwechselschlag erkannt wird, nimmt der Schalter 12 die Schalterstellung s2 ein. In diesem Fall wird das Fahrerwunschsignal dpwed einem Filter 13 zugeführt.

Das Filter 13 ist zum Beispiel ein Tiefpassfilter 2. Ordnung PT2 oder ein Tiefpassfilter 1. Ordnung PT1 mit Totzeit. Nach Durchlauf des Filters 13 gelangt der Fahrerwunsch dpwed an das Stellglied 4 der Drosselklappe 3. Aufgrund der Filterung folgt die Öffnung α der Drosselklappe 3 dem Fahrerwunsch dpwed um eine bestimmte Zeitkonstante verzögert, wie der Figur 3 zu entnehmen ist. Die Filterzeitkonstante, mit der der Fahrerwunsch dpwed verzögert wird, wird adaptiv so geregelt, daß der Gradient der Motordrehzahl dnmot minimal wird. Als Regelkriterium den Gradienten dnmot der Motordrehzahl und nicht die Motordrehzahl nmot selbst heranzuziehen, ist deshalb von Vorteil, weil der Gradient dnmot eine deutlichere Reaktion auf Lastwechsel zeigt. Als weiteres Kriterium ist dem Filter 13 auch noch der Gradient da der Drosselklappenöffnung zugeführt, der die Fahrdynamik beschreibt. Welche Bedeutung die Fahrdynamik in Form des Gradienten dα der Drosselklappenöffnung im Regelprozeß hat, wird noch näher anhand des Ablaufdiagramms in Figur 4 beschrieben.

Für das Filter 13 kann unter einer Vielzahl von in Klassen eingeteilter Filterzeitkonstanten eine geeignete Filterzeitkonstante ausgewählt werden, die dann iterativ so verändert wird, bis der Gradient dnmot der Motordrehzahl minimal wird. Anstelle eines Filters mit verschiedenen Filterzeitkonstanten kann auch ein Verzögerungsglied mit unterschiedlichen Verzögerungszeitkonstanten vorgesehen werden. Die Regelung kann so erfolgen, daß z.B. die Amplitude des Gradienten dnmot der Motordrehzahl oder das Integral über die vom Gradienten dnmot umschlossene Fläche minimal wird

Die für das Filter 13 zur Verfügung stehenden Filterzeitkonstanten sind in gangabhängige und/oder drehzahlabhängige und/oder drehmomentenabhängige Klassen eingeteilt. Bei einer gangabhängigen Klasseneinteilung der Filterzeitkonstanten wird dem Filter 13 von einem Sensor 14 eine Information über den jeweils eingelegten Getriebegang zugeleitet. Jede einem Getriebegang zugeordnete Klasse von Filterzeitkonstanten kann auch in Abhängigkeit von der Motordrehzahl nmot und/oder dem Fahrerwunsch dpwed noch in mehrere Filterzeitkonstanten unterklassifiziert sein. Deshalb sind dem Filter 13 neben der Information über den eingelegten Getriebegang auch noch die Motordrehzahl nmot und der Fahrerwunsch dpwed zugeführt. Je höher der eingelegte Getriebegang ist, desto größer ist die ihm zugeordnete Filterzeitkonstante. Falls der Einfluß der Motordrehzahl nmot und/oder des Fahrerwunsches dpwed bei der Klassifizierung der Filterzeitkonstanten berücksichtigt werden soll, ist es zweckmäßig, daß mit zunehmender Motordrehzahl nmot und mit zunehmendem Fahrerwunsch dpwed die Filterzeitkonstante größer wird. Durch die Klassifizierung der Filterzeitkonstanten läßt sich der Regelvorgang optimal an verschiedene Betriebszustände der Brennkraftmaschine anpassen.

Sollte die Klassifizierung der Filterzeitkonstanten, wie vorangehend erwähnt, auch nach Drehmomentbereichen klassifiziert sein, so ist ein Sensor 15 vorgesehen, der dem Filter 13 eine Information über das Drehmoment mm der Brennkraftmaschine zuleitet. Im Filter 13 findet eine Einteilung in Drehmomentenbereiche statt, wobei jedem Drehmomentenbereich eine Klasse der Filterzeitkonstanten zugeordnet ist. Bei einer Klassifizierung der Filterzeitkonstanten nach der Motordrehzahl nmot erfolgt eine Bereichseinteilung der vom Sensor 7 gelieferten Motordrehzahl nmot, und jedem Drehzahlbereich wird eine Klasse der Filterzeitkonstanten zugeordnet.

Die Filterzeitkonstanten bzw. Verzögerungszeitkonstanten, welche im Block 13 nach Klassen eingeteilt und adaptiv verändert werden, können auf eine oder mehrere Steuer- oder Regelgrößen der Brennkraftmaschine Einfluß nehmen. Zu diesen Steuer- oder Regelgrößen können z.B. die Drosselklappenstellung und/oder der Zündwinkel und/oder der Einspritzbeginn und/oder die Einspritzzeit gehören. In Figur 1 führen daher vom Block 13 Steuerleitungen entweder zum Stellglied 4 der Drosselklappe 3 oder zu den Einspritzventilen 18 oder zu der Zündeinrichtung 19 der Brennkraftmaschine 1.

An dem in der Figur 4 dargestellten Ablaufdiagramm wird nun der Regelvorgang zur Lastwechselschlagdämpfung genauer beschrieben. Dabei wird beispielhaft als Steuer- bzw. Regelgröße, auf welche die Eingriffsparameter Einfluß nehmen, allein die Stellung der Drosselklappe 3 herangezogen. Eingriffsparameter sind beispielhaft Filterzeitkonstanten, welche ausschließlich getriebegangabhängig sind, und die adaptive Einstellung der Filterzeitkonstanten erfolgt nur in Abhängigkeit von der Änderung der Motordrehzahl. In aufeinanderfolgenden Meßintervallen, die mit dem Zeitindex n gekennzeichnet sind, läuft folgender Prozeß ab:

In einem ersten Schritt 20 wird abgefragt, ob ein Lastwechsel vorliegt, der einen Lastwechselschlag zur Folge haben könnte. Ist das der Fall, so werden im aktuellen Meßintervall n im Schritt 21 die Motordrehzahl nmot(n), im Schritt 22 der Fahrerwunsch dpwed(n) und im Schritt 23 der eingeschaltete Getriebegang gg(n) ermittelt. In Abhängigkeit von diesen drei Größen wird im Verfahrensschritt 24 eine von mehreren in Klassen eingeteilten Filterzeitkonstanten F1, ..., Fk ausgewählt.

Im Verfahrensschritt 25 wird der Gradient dnmot(n) der Motordrehzahl und im Verfahrensschritt 26 der Gradient dα(n) der Drosselklappenöffnung ermittelt. In Schritt 27 wird der im aktuellen Meßintervall n ermittelte Gradient dnmot(n) der Motordrehzahl mit dem im vorhergehenden Meßintervall n-1 erfaßten und abgespeicherten Gradienten dnmot(n-1) verglichen. Ist der aktuell gemessene Gradient dnmot(n) der Motordrehzahl größer als der Gradient dnmot(n-1) des vorhergehenden Meßintervalls, so wird im Schritt 28 der im aktuellen Meßintervall n ermittelte Gradient dα(n) der Drosselklappenöffnung mit einer vorgegebenen Schwelle SD verglichen. Der Gradient dα der Drosselklappenöffnung sagt etwas über die Dynamik des Motors auf. Ist dieser Gradient größer als die vorgegebene Schwelle SD so hat der Motor noch eine ausreichende Dynamik. Die im Schritt 24 ausgewählte Filterzeitkonstante F1, ..., Fk kann dann im Schritt 30 erhöht werden. Liegt aber der Gradient dα(n) der Drosselklappenöffnung unterhalb der vorgegebenen Schwelle SD, so reicht die Dynamik des Motors nicht mehr aus und es sollte, wie im Schritt 31 angedeutet, die ausgewählte Filterzeitkonstante gegenüber dem vorhergehenden Meßintervall nicht verändert werden.

Bei der adaptiven Anpassung der Filterzeitkonstanten muß ein Kompromiß zwischen optimaler Dämpfung eines Lastschlages einerseits und noch ausreichender Motordynamik andererseits eingegangen werden. Ein sehr geringer Lastschlag tritt bei einer starken Dämpfung bzw. Filterung des Fahrerwunsches dpwed auf. Der Motor reagiert aber dann erst nach einigen 100 ms auf den Fahrerwunsch, was wiederum die Beschleunigungswerte des Fahrzeugs beeinflußt. Deshalb wird der Schwellwertvergleich des Gradienten dα der Drosselklappenöffnung durchgeführt. Dieser Schwellwert SD kann an die Fahrweise - wirtschaftlich oder sportlich - angepaßt werden.

Es kann auch die Änderung der ausgewählten Filterzeitkonstante durch eine obere und eine untere Schwelle begrenzt werden, wobei die Schwellen an die Fahrweise - wirtschaftlich oder sportlich - anpaßbar sind.

Wird im Schritt 27 festgestellt, daß der im aktuellen Zeitintervall n festgestellte Gradient dnmot(n) der Motordrehzahl kleiner ist als der Gradient dnmot(n-1) des vorhergehenden Meßintervalls, so wird im Schritt 32 die ausgewählte Filterzeitkonstante F1, ..., Fk verringert. Diese Veränderung der Filterzeitkonstante im Schritt 32 wird aber nur ausgeführt, wenn zuvor im Schritt 29 durch Vergleich des Gradienten dα(n) der Drosselklappenöffnung mit der Schwelle SD eine ausreichende Motordynamik festgestellt worden ist. Falls die Motordynamik nicht ausreichend ist, wird wiederum im Schritt 31 die ausgewählte Filterzeitkonstante unverändert gelassen. Durch die Abfragen 28 und 29 wird bei der Veränderung der Filterzeitkonstante darauf geachtet, daß in jedem Fall die Motordynamik noch ausreicht. Falls der Motordynamik weniger Beachtung geschenkt werden kann, kann die Filterzeitkonstante auch allein in Abhängigkeit von der Abfrage im Schritt 37 bezüglich der Veränderung des Gradienten dnmot der Motordrehzahl eingestellt werden.

Die adaptive Einstellung der Filterzeitkonstante kann in Abhängigkeit von der Änderung der Motordrehzahl dnmot und/oder auch von einer Drehmomentenänderung dnm erfolgen, die im Schaltblock 16 aus dem vom Sensor 15 gelieferten Drehmoment nmm ermittelt wird. Lastschläge können ebenso aus der Fahrzeugbewegung abgeleitet werden, d.h. aus der Beschleunigungsänderung des Fahrzeugs in Fahrtrichtung oder aus der Gierratenänderung des Fahrzeugs. In der Figur 1 ist ein Sensor 17 angegeben, der Änderungen der Fahrzeugbeschleunigung in Fahrtrichtung und/oder Änderungen der Gierrate mißt und das gemessene Signal db an den Block 13 weiterleitet, der daraus die adaptive Einstellung der Eingriffsparameter (Filterzeitkonstanten bzw. Verzögerungszeitkonstanten) vornimmt.

## Patentansprüche

1. Verfahren zur Dämpfung von ruckartigen Fahrzeugbewegungen, die auf schnelle Änderungen des Motorbetriebszustandes zurückzuführen sind, wobei auf mindestens eine Steuer- oder Regelgröße des Motors derart Einfluss genommen wird, dass die ruckartigen Fahrzeugbewegungen gedämpft werden, **dadurch gekennzeichnet, dass** es mehrere nach mindestens einem Betriebsparameter (gg, nmot, mm) klassifizierte, auf die Steuer- oder Regelgröße (3, 18, 19) einwirkende Eingriffsparameter (F1, ..., Fk) gibt, von denen der dem jeweils aktuellen Wert des Betriebsparameters (gg, nmot, mm) zugeordnete Eingriffsparameter (F1, ..., Fk) adaptiv in Abhängigkeit von der Änderung eines oder mehrerer Betriebsparameter (dnmot, dmm, db) eingestellt wird, wobei dieser Eingriffsparameter iterativ so verändert wird, dass die Änderung des oder der Betriebsparameter (dnmot, dmm, db) minimal wird.

2. Verfahren nach Anspruch 1, **dadurch gekennzeichnet, dass** die Eingriffsparameter (F1, ..., Fk) nach Getriebegängen (gg) und/oder nach Drehzahlbereichen (nmot) und/oder nach Drehmomentsbereichen (mm) in Klassen eingeteilt sind.

3. Verfahren nach Anspruch 1 oder 2, **dadurch gekennzeichnet, dass** die Steuer- oder Regelgröße(n), auf welche die Eingriffsparameter (F1, ..., Fk) Einfluss nehmen, die Drosselklappenstellung (α) und/oder der Zündwinkel und/oder der Einspritzbeginn und/oder die Einspritzzeit ist (sind).

4. Verfahren nach einem der vorhergehenden Ansprüche, **dadurch gekennzeichnet, dass** die Eingriffsparameter Filterzeitkonstanten (F1, ..., Fk) oder Verzögerungszeitkonstanten sind.

5. Verfahren nach Anspruch 1, **dadurch gekennzeichnet, dass** die Zeitkonstante (F1, ..., Fk) eines Filters (13) erhöht wird, wenn die im aktuellen Messintervall ermittelte Betriebsparameteränderung (dnmot(n)) größer ist als die im vorhergehenden Messintervall ermittelte Betriebsparameteränderung (dnmot(n-1)), dass die Filterzeitkonstante (F1, ..., Fk) verringert wird, wenn die im aktuellen Messintervall ermittelte Betriebsparameteränderung (dnmot(n)) kleiner ist als die im vorhergehenden Messintervall ermittelte Betriebsparameteränderung (dnmot(n-1)), und dass in allen übrigen Fällen die Filterzeitkonstante (F1, ..., Fk) unverändert bleibt.

6. Verfahren nach Anspruch 5, **dadurch gekennzeichnet, dass** die Filterzeitkonstante (F1, ..., Fk) nur dann erhöht bzw. vermindert wird, wenn die im aktuellen Messintervall ermittelte Änderung der Drosselklappenöffnung (dα((n)) größer ist als eine vorgebbare Schwelle (SD) und dass die Filterzeitkonstante (F1, ..., Fk) unverändert bleibt, wenn die im aktuellen Messintervall ermittelte Änderung der Drosselklappenöffnung (dα(n)) kleiner ist als eine vorgebbare Schwelle (SD)

7. Verfahren nach Anspruch 5, **dadurch gekennzeichnet, dass** die Veränderung der Filterzeitkonstante (F1, ..., Fk) durch eine untere und eine obere Schwelle begrenzt wird und dass die Schwellen an die Fahrweisen - wirtschaftlich oder sportlich - angepasst werden können.

8. Verfahren nach Anspruch 1 oder 5, **dadurch gekennzeichnet, dass** die adaptive Einstellung des Eingriffsparameters (F1, ..., Fk) in Abhängigkeit von der Änderung der Motordrehzahl (dnmot) und/oder von einer Drehmomentenänderung (dmm) erfolgt.

9. Verfahren nach einem der Ansprüche 1 oder 5, **dadurch gekennzeichnet, dass** die adaptive Einstellung des Eingriffsparameters (F1, ..., Fk) in Abhängigkeit von der Änderung einer gemessenen Beschleunigung des Fahrzeugs in Fahrtrichtung und/oder einer gemessenen Gierrate (db) erfolgt.

## Claims

1. Method for damping jerking vehicle movements which are due to rapid changes in the engine operating state, at least one control variable of the engine being influenced in such a way that the jerking vehicle movements are damped, **characterized in that** there are a plurality of engagement parameters (F1, ..., Fk) which are classified according to at least one operating parameter (gg, nmot, mm) and act on the control variable (3, 18, 19), and of which the engagement parameter (F1, ..., Fk) which is assigned to the respectively current value of the operating parameter (gg, nmot, mm) is set adaptively as a function of the change in one or more operating parameters (dnmot, dmm, db), this engagement parameter being changed iteratively in such a way that the change in the operating parameter or parameters (dnmot, dmm, db) becomes minimal.

2. Method according to Claim 1, **characterized in that** the engagement parameters (F1, ..., Fk) are divided up into classes according to gear speed (gg) and/or according to rotational speed ranges (nmot) and/or according to torque ranges (mm).

3. Method according to Claim 1 or 2, **characterized in that** the control variable or variables which the engagement parameters (F1, ..., Fk) influence is/are the throttle valve position (α) and/or the ignition angle and/or the starter injection and/or the injection time.

4. Method according to one of the preceding claims, **characterized in that** the engagement parameters are filter time constants (F1, ..., Fk) or delay time constants.

5. Method according to Claim 1, **characterized in that** the time constant (F1, ..., Fk) of a filter (13) is increased if the change (dnmot(n)) in the operating parameter which is determined in the current measuring interval is greater than the change (dnmot(n-1)) in the operating parameter which is determined in the preceding measuring interval, **in that** the filter time constant (F1, ..., Fk) is reduced if the change (dnmot(n)) in the operating parameter which is determined in the current measuring interval is smaller than the change (dnmot(n-1)) in the operating parameter which is determined in the preceding measuring interval, and **in that** in all other cases the filter time constant (F1, ..., Fk) remains unchanged.

6. Method according to Claim 5, **characterized in that** the filter time constant (F1, ..., Fk) is increased or decreased only if the change in the opening (dα(n)) of the throttle valve which is determined in the current measuring interval is greater than a predefinable threshold (SD), and **in that** the filter time constant (F1, ..., Fk) remains unchanged if the change in the opening (dα(n)) of the throttle valve which is determined in the current measuring interval is smaller than a predefinable threshold (SD).

7. Method according to Claim 5, **characterized in that** the change in the filter time constant (F1, ..., Fk) is limited by a lower threshold and an upper threshold, and **in that** the thresholds can be adapted to the driving styles (economical or sporty).

8. Method according to Claim 1 or 5, **characterized in that** the engagement parameter (F1, ..., Fk) is set adaptively as a function of the change in the engine speed (dnmot) and/or a change (dmm) in the torque.

9. Method according to one of Claims 1 or 5, **characterized in that** the engagement parameter (F1, ..., Fk) is set adaptively as a function of the change in a measured acceleration of the vehicle in the direction of travel and/or a measured yaw rate (db).

## Revendications

1. Procédé pour atténuer des mouvements brusques de véhicules qui sont à imputer à des variations rapides de l'état de fonctionnement du moteur, selon lequel on agit sur au moins une grandeur de commande ou de réglage du moteur de manière à atténuer les mouvements brusques du véhicule,
**caractérisé en ce que**
parmi plusieurs paramètres d'intervention (F1, ..., Fk) classés en fonction d'au moins un paramètre de fonctionnement (gg, nmot, mm), et agissant sur la grandeur de commande ou de réglage (3, 18, 19), on règle le paramètre d'intervention (F1, ..., Fk) associé à la valeur actuelle du paramètre de fonctionnement concerné (gg, nmot, mm) est réglé de façon adaptative en fonction de la variation d'un ou de plusieurs paramètres de fonctionnement (dnmot, dmm, db), en modifiant ce paramètre d'intervention itérativement pour minimiser la variation du ou des paramètres de fonctionnement (dnmot, dmm, db).

2. Procédé selon la revendication 1,
**caractérisé en ce que**
les paramètres d'intervention (F1, ..., Fk) sont répartis en classes d'après des rapports de la boîte de vitesses (gg) et/ou d'après des plages de vitesse de rotation (nmot) et/ou d'après des plages de couple (mm).

3. Procédé selon la revendication 1 ou 2,
**caractérisé en ce que**
la ou les grandeurs de commande ou de réglage sur lesquelles les paramètres d'intervention (F1,...Fk) agissent, est ou sont la position du volet de réglage (α) et/ou l'angle d'allumage et/ou le début d'injection et/ou le temps d'injection.

4. Procédé selon une des revendications précédentes,
**caractérisé en ce que**
les paramètres d'intervention sont des constantes de temps de filtration (F1, ..., Fk) ou des constantes de temps de temporisation.

5. Procédé selon la revendication 1,
**caractérisé en ce que**
la constante de temps (F1, ..., Fk) d'un filtre est augmentée lorsque la variation de paramètre de fonctionnement (dnmot(n)) observée dans l'intervalle de mesure actuel est plus grande que la variation de paramètre de fonctionnement (dnmot(n-1)) observée dans l'intervalle de mesure précédent, la constante de temps de filtration (F1, ..., Fk) est diminuée lorsque la variation de paramètre de fonctionnement (dnmot(n)) observée dans l'intervalle de mesure actuel est plus petite que la variation du paramètre de fonctionnement (dnmot(n-1)) observée dans l'intervalle de mesure précédent, et dans tous les autres cas, la constante de temps de filtration (F1, ..., Fk) reste inchangée.

6. Procédé selon la revendication 5,
**caractérisé en ce que**
la constante de temps de filtration (F1, ..., Fk) n'est augmentée ou diminuée que lorsque la variation de l'ouverture du volet de réglage (da(n)) observée dans l'intervalle de mesure actuel est supérieure à un seuil (SD) pouvant être prédéterminé, et la constante de temps de filtration (F1, ..., Fk) reste inchangée lorsque la variation de l'ouverture du volet de réglage (da(n)) observée dans l'intervalle de mesure actuel est inférieure à un seuil (SD) pouvant être prédéterminé.

7. Procédé selon la revendication 5,
**caractérisé en ce que**
la variation de la constante de temps de filtration (F1, ..., Fk) est limitée par un seuil inférieur et par un seuil supérieur, les seuils pouvant être adaptés aux modes de conduite - économique ou sportif.

8. Procédé selon la revendication 1 ou 5,
**caractérisé en ce que**
le réglage adaptatif du paramètre d'intervention (F1, ..., Fk) s'effectue en fonction de la variation de la vitesse de rotation du moteur (dnmot) et/ou d'une variation du couple (dmm).

9. Procédé selon une des revendications 1 ou 5,
**caractérisé en ce que**
le réglage adaptatif du paramètre d'intervention (F1, ..., Fk) s'effectue en fonction de la variation d'une accélération mesurée du véhicule dans la direction de la marche et/ou d'une vitesse de lacet mesurée (db).
